# EUROPEAN PATENT APPLICATION

(11) **EP 2 445 227 A1**
(43) Date of publication of application: **25.04.2012**
(21) Application number: 11155847.4
(22) Date of filing: 24.02.2011
(51) Int. Cl.: H04N 21/458, G06F 9/445, H04N 21/433

(54) **Method for software update and display apparatus thereof**

(30) Priority: 21.10.2010 KR 20100102765; 21.10.2010 US 405343 P
(71) Applicant: LG Electronics, Inc., Seoul 150-721 (KR)
(72) Inventor: Ryu, Seonghwan, Seoul 137-24 (KR); Joo, Hanbitt, Seoul 137-24 (KR); Kim, Sangjeon, Seoul 137-724 (KR)
(74) Representative: Cabinet Plasseraud

(57) **Abstract**

**METHOD FOR SOFTWARE UPDATE AND DISPLAY APPARATUS THEREOF**

A multifunctional display apparatus is provided by including a tuner, a network interface, a display, a power supply, a wireless input interface, a storage device, and a controller. The controller may determine whether software stored in the storage device is to be updated. The controller may provide the display apparatus in an update mode in response to the display apparatus receiving a turn-off request and the controller determines that the software is to be updated. In the update mode, the display apparatus receives updated software and power to the display is OFF, and the controller provides the display apparatus in a turn-off mode after completing the update mode. In the turn-off mode, power to additional components of the display apparatus is OFF.

## Description

### CROSS-REFERENCE TO RELATED APPLICATION

The present application claims priority from Korean Patent Application No. 10-2010-0102765, filed October 21, 2010, and claims priority from U.S. Provisional Application No. 61/405,343, filed October 21, 2010, the subject matters of which are incorporated herein by reference.

### BACKGROUND

### 1. Field

Embodiments of the present disclosure may relate to a method of updating (or upgrading) software in a display apparatus.

### 2. Background

Digital television (TV) service may use a wired or wireless communication network. The digital TV service may provide various services that existing analog broadcasting service can not provide.

For example, Internet Protocol TV (IPTV) service corresponding to a kind of digital TV service may provide interactivity that allows users to actively select kinds and viewing time of viewing programs. Based on such interactivity, the IPTV service may provide various additional services, for example, Internet search, home shopping and/or on-line games.

Digital TVs with appropriate built-in software may be released upon release of a product. The software may be for controlling user interfaces and/or operations of the digital TVs, and continuous updating (or upgrading) of the software may be required for use environment changes and/or performance enhancements of the digital TVs.

### BRIEF DESCRIPTION OF THE DRAWINGS

Arrangements and embodiments may be described in detail with reference to the following drawings in which like reference numerals refer to like elements and wherein:

FIG. 1 is a diagram of a configuration of a broadcasting system according to an embodiment;

FIG. 2 is a diagram of a configuration of a broadcasting system according to an embodiment;

FIG. 3 is a flowchart of a data transmission/reception method between a display apparatus and a service provider according to an embodiment;

FIG. 4 is a block diagram of a configuration of a display apparatus according to an embodiment;

FIG. 5 is a block diagram of a configuration of a display apparatus according to an embodiment;

FIG. 6 is a diagram of a platform structure of a display apparatus, according to an embodiment;

FIG. 7 is a flowchart of a software update method of a display apparatus according to an embodiment;

FIG. 8 is a diagram of a first embodiment of a method that changes a mode of the display apparatus and updates software;

FIG. 9 is a graph showing an embodiment of a consumption power of a display apparatus;

FIG. 10 is a diagram of a first embodiment of a user interface that is provided for updating of software;

FIG. 11 is a diagram of a second embodiment of a method that changes a mode of the display apparatus and updates software;

FIG. 12 is a diagram of a second embodiment of a user interface that is provided for updating of software;

FIG. 13 is a diagram of an embodiment of a method for executing an application;

FIGs. 14 to 22 are diagrams of a third embodiment of a user interface that is provided for updating of software;

FIG. 23 is a diagram of an embodiment of a home screen that is displayed in a display apparatus;

FIGs. 24 to 26 are diagrams of a fourth embodiment of a user interface that is provided for update of software; and

FIGs. 27-30 are diagrams of an embodiment of a user interface provided for update of software.

### DETAILED DESCRIPTION

A software update (or upgrade) method and a display apparatus using the same according to embodiments may now be described in detail with reference to the accompanying drawings.

A multifunctional display apparatus is an intelligent display apparatus where a computer support function is added to a broadcasting reception function, and may include a more convenient interface than a handiwork type of input device, touch screen or space remote controller because it may perform a broadcasting reception function and may have an added Internet function. The display apparatus may access the Internet and a computer through support of a wired or wireless Internet function and may perform functions such as email, web browsing, banking and gaming. For such various functions, a standardized general-purpose Operating System (OS) may be used.

In a display apparatus, various applications may be freely added or deleted to/from a general-purpose OS kernel, and thus various user-friendly functions may be performed. The display apparatus may be a network TV, a HBBTV and/or a smart TV. The display apparatus may also be applied to smart phones.

As terms used this disclosure, widely-used terms may have been selected in consideration of the function, but the terms may be changed with the intention of one skilled in the art, custom or advent of new technology. Moreover, a specific example that uses a term that is arbitrarily selected by the applicant, in which the meaning of the term may be described in a corresponding portion of the description. Accordingly, terms used in specification should be interpreted based on their substantial meaning and contents throughout specification, rather than their simple name.

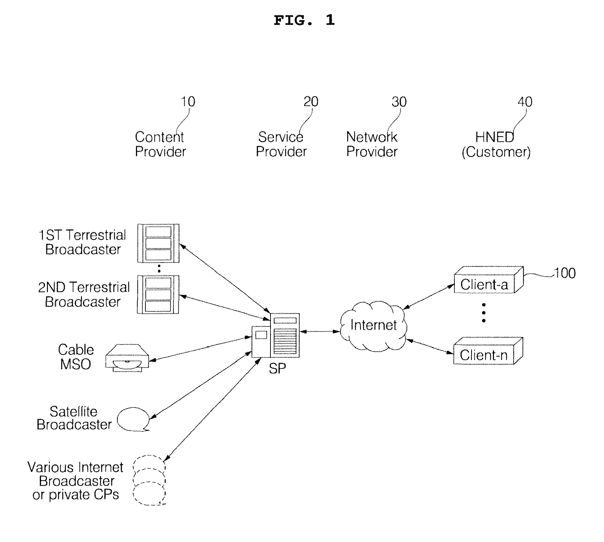

FIG. 1 illustrates an overall configuration of a broadcasting system including a display apparatus according to an embodiment. Other embodiments and configurations may also be provided.

FIG. 1 shows that a broadcasting system may include a Content Provider (CP) 10, a Service Provider (SP) 20, a Network Provider (NP) 30, and a Home Network End Device (HNED) 40.

The HNED 40 may correspond to a client 100, which may be a display apparatus. The display apparatus may be a network TV, a smart TV, an Internet Protocol TV (IPTV), etc. The display apparatus as used hereafter may be considered a multifunctional display apparatus.

The CP 10 may create and provide content. The CP 10 may be a terrestrial broadcaster, a cable System Operator (SO) or Multiple System Operator (MSO), a satellite broadcaster, or an Internet broadcaster, as shown in FIG. 1.

The CP 10 may also provide various applications, as may be described below.

The SP 20 may provide content received from the CP 10 in a service package. For example, the SP 20 may package first terrestrial broadcasting, second terrestrial broadcasting, cable broadcasting, satellite broadcasting, Internet broadcasting, and applications and provide the package to users.

The SP 20 may unicast or multicast a service to the client 100. Unicast may be a form of transmission in which information is sent from only one transmitter to only one receiver.

The unicast transmission may be point-to-point, involving only two nodes. In one example of the unicast transmission, upon reception of a request for data from a receiver, a server may transmit the data to only one receiver.

The multicast transmission may be a type of transmission or communication in which a transmitter transmits data to a group of receivers. For example, a server may transmit data to a plurality of pre-registered receivers at one time. For multicast registration, the Internet Group Management Protocol (IGMP) may be used.

The NP 30 may provide a network over which a service is provided to the client 100. The client 100 may construct a home network and receive a service over the home network.

Content transmitted in the above-described broadcasting system may be protected through conditional access or content protection. CableCard and Downloadable Conditional Access System (DCAS) are examples of conditional access or content protection.

The client 100 may also transmit content over a network. The client 100 may serve as a CP, and thus the CP 10 may receive content from the client 100. Therefore, an interactive content service or data service can be provided.

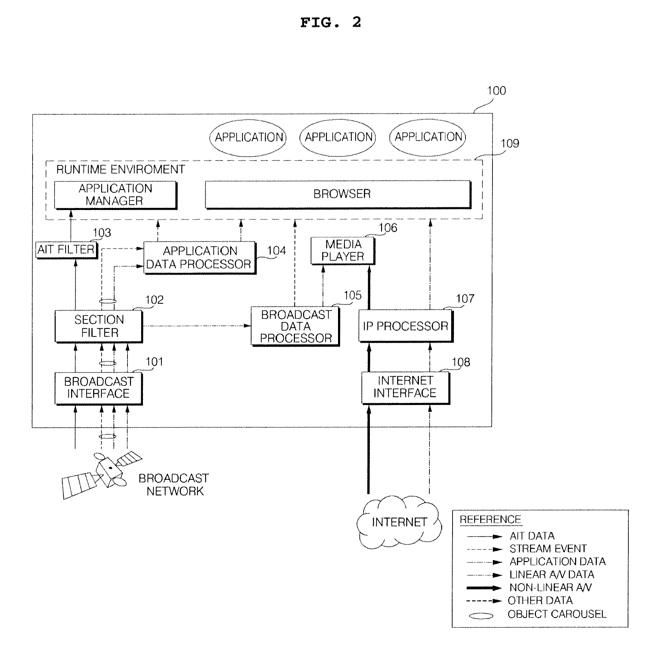

FIG. 2 shows a configuration of a display apparatus. The display apparatus 100 that corresponds to a client of FIG. 1 may be connected to a broadcast network and the Internet.

The display apparatus 100 may include a broadcast interface 101, a section filter 102, an Application Information Table (AIT) filter 103, an application data processor 104, a broadcast data processor 105, a media player 106, an IP processor 107, an Internet interface 108, and/or a runtime module 109, for example.

The display apparatus 100 may receive AIT data, real-time broadcast content, application data, and stream events through the broadcast interface 101. The real-time broadcast content may be referred to as linear Audio/Video (A/V) content.

The section filter 102 may perform section filtering on four types of data received through the broadcast interface 101, and output the AIT data to the AIT filter 103, the linear A/V content to the broadcast data processor 105, and the stream events and application data to the application data processor 104.

The display apparatus 100 may receive non-linear A/V content and application data through the Internet interface 108. The non-linear A/V content may be a Content On Demand (CoD) application, for example.

The non-linear A/V content and the application data may be transmitted to the media player 106 and the runtime module 109, respectively.

The runtime module 109 may include an application manager and a browser as shown in FIG. 2. The application manager may control the life cycle of an interactive application using the AIT data, for example. The browser may display and process the interactive application.

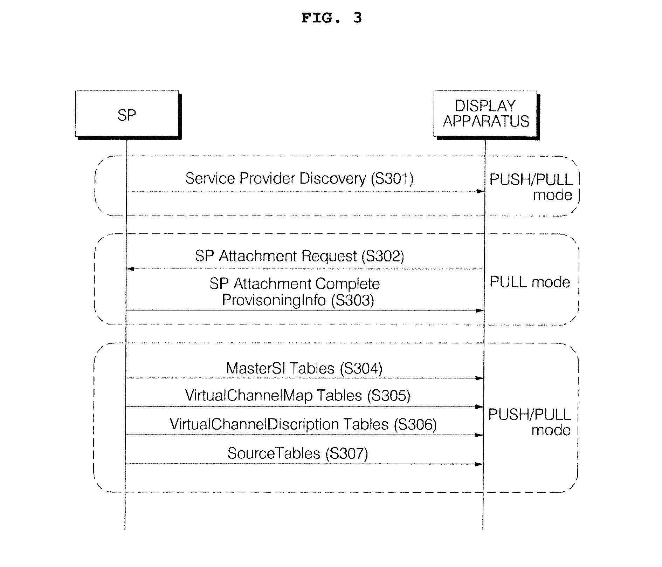

FIG. 3 is a diagram of a signal flow for an operation for attaching to an SP and receiving channel information from the SP in the display apparatus.

As shown in FIG. 3, an SP performs an SP Discovery operation (S301) and the display apparatus transmits a Service Provider Attachment Request signal to the SP (S302). Upon completion of attachment to the SP, the display apparatus may receive provisioning information from the SP (S303). The display apparatus may further receive Master System Information (SI) Tables, Virtual Channel Map Tables, Virtual Channel Description Tables, and Source Tables from the SP (S304 to S307).

For example, SP Discovery is a process by which SPs that provide IPTV services search for Service Discovery (SD) servers having information about the offerings of the SPs.

In order to receive information about the SD servers, an SD server address list may be detected, for example, using three methods, specifically use of an address preset in the display apparatus or an address manually set by a user, Dynamic Host Configuration Protocol (DHCP)-based SP Discovery, and Domain Name System Service (DNS SRV)-based SP Discovery.

The display apparatus may access a specific SD server using the SD server address list obtained through one of the above three methods and receive a SP Discovery record from the specific SD server. The Service Provider Discovery record may include information needed to perform Service Discovery on an SP basis.

The display apparatus may then start a Service Discovery operation using the SP Discovery record. These operations may be performed in a push mode or a pull mode.

The display apparatus may access an SP attachment server specified by an SP attachment locator included in the SP Discovery record and perform a registration procedure (or a service attachment procedure).

After accessing an authentication service server of an SP specified by an SP authentication locator and performing an authentication procedure, the display apparatus may perform a service authentication procedure.

After service attachment is successfully performed, a server may transmit data in the form of a provision information table to the display apparatus.

During service attachment, the display apparatus may include an Identifier (ID) and location information thereof in data and transmit the data to the service attachment server. Thus, the service attachment server may specify a service that the display apparatus has subscribed to based on the ID and location information.

Additionally, the service attachment server may provide, in the form of a provisioning information table, address information from which the display apparatus caN obtain Service Information (SI). The address information may correspond to access information about a Master SI Table. This method may facilitate provision of a customized service to each subscriber.

The SI may be divided into a Master SI Table record for managing access information and version information about a Virtual Channel Map, a Virtual Channel Map Table for providing a list of services in the form of a package, a Virtual Channel Description Table that contains details of each channel, and a Source Table that contains access information about actual services.

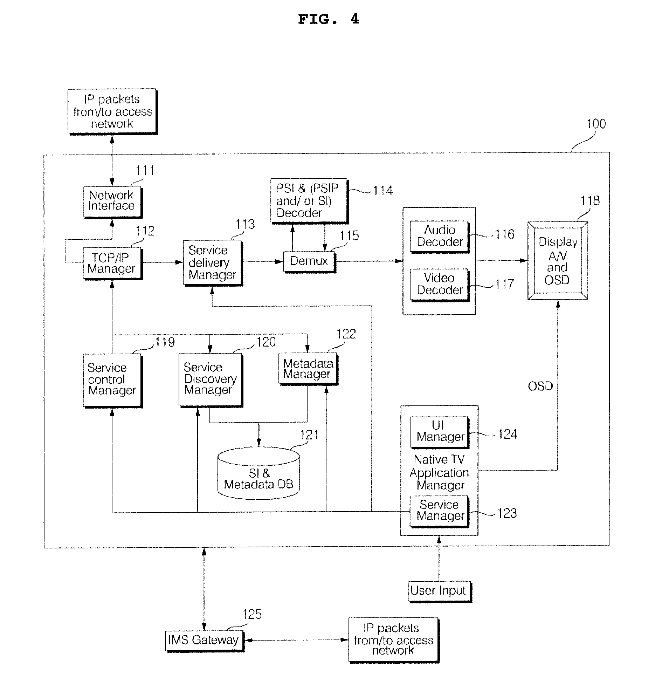

FIG. 4 is a block diagram of a display apparatus according to an embodiment. Other embodiments and configurations may also be provided.

As shown in FIG. 4, the display apparatus 100 may include a network interface 111, a Transmission Control Protocol/Internet Protocol (TCP/IP) manager 112, a service delivery manager 113, a Demultiplexer (DEMUX) 115, a Program Specific Information (PSI) & (Program and System Information Protocol (PSIP) and/or SI) decoder 114, a display A/V and On Screen Display (OSD) module 118, a service control manager 119, a service discovery manager 120, a metadata manager 122, an SI & metadata DataBase (DB) 121, a User Interface (UI) manager 124, and a service manager 123.

The network interface 111 may transmit packets to and receive packets from a network. The network interface 111 may receive services and content from an SP over the network.

The TCP/IP manager 112 may be involved in packet reception and transmission of the display apparatus 100 (i.e., packet delivery from a source to a destination). The TCP/IP manager 112 may classify received packets according to appropriate protocols and output the classified packets to the service delivery manager 113, the service discovery manager 120, the service control manager 119, and the metadata manager 122.

The service delivery manager 113 may control received service data. For example, when controlling real-time streaming data, the service delivery manager 113 may use the Real-time Transport Protocol/Real-time Transport Control Protocol (RTP/RTCP).

If real-time streaming data is transmitted over RTP/RTCP, the service delivery manager 113 may parse the received real-time streaming data using RTP and output the parsed real-time streaming data to the DEMUX 115 or store the parsed real-time streaming data in the SI & metadata DB 121 under control of the service manager 123. Additionally, the service delivery manager 113 may feed back network reception information to a server that provides the real-time streaming data service using RTCP.

The DEMUX 115 may demultiplex a received packet into audio data, video data and PSI data and output the audio data, video data and PSI data to the audio decoder 116, the video decoder 117, and the PSI & (PSIP and/or SI) decoder 114, respectively.

The PSI & (PSIP and/or SI) decoder 114 may decode SI such as PSI. More specifically, the PSI & (PSIP and/or SI) decoder 114 may decode PSI sections, PSIP sections and/or SI sections received from the DEMUX 115.

The PSI & (PSIP and/or SI) decoder 114 may construct an SI DB by decoding the received sections and store the SI DB in the SI & metadata DB 121.

The audio decoder 116 and the video decoder 117 may decode the audio data and the video data received from the DEMUX 115 and output the decoded audio and video data to a user through the display A/V and OSD module 118.

The UI manager 124 and the service manager 123 may manage the overall state of the display apparatus 100, provide UIs, and manage other managers.

For example, the UI manager 124 may provide a Graphical User Interface (GUI) in the form of an OSD and perform a reception operation corresponding to a key input received from the user. For example, upon reception of a key input signal regarding channel selection from the user, the UI manager 124 may transmit the key input signal to the service manager 123.

The service manager 123 may control managers associated with services, such as the service delivery manager 113, the service discovery manager 120, the service control manager 119, and the metadata manager 122.

The service manager 123 may also make a channel map and select a channel using the channel map according to the key input signal received from the UI manager 124.

The service manager 123 may set the audio/video Packet ID (PID) of the selected channel based on SI about the channel received from the PSI & (PSIP and/or SI) decoder 114.

The service discovery manager 120 may provide information necessary to select an SP that provides a service. Upon reception of a channel selection signal from the service manager 123, the service discovery manager 120 may detect a service based on the channel selection signal.

The service control manager 119 may take charge of selecting and control services. For example, if a user selects live broadcasting, such as a conventional broadcasting service, the service control manager may select and control the service using Internet Group Management Protocol (IGMP) or Real-Time Streaming Protocol (RTSP). If the user selects Video on Demand (VoD), the service control manager 119 may select and control the service.

The RTSP supports trick mode for real-time streaming. Further, the service control manager 119 may initialize and manage a session through an IP Multimedia Control (IMC) gateway using IP Multimedia Subsystem (IMS) and Session Initiation Protocol (SIP). The protocols are given by way of example and thus other protocols are also applicable according to other embodiments.

The metadata manager 122 may manage metadata related to services and store the metadata in the SI & metadata DB 121.

The SI & metadata DB 121 may store the SI decoded by the PSI & (PSIP and/or SI) decoder 114, the metadata managed by the metadata manager 122, and the information required to select an SP, received from the service discovery manager 120. The SI & metadata DB 121 may store setup data for the system.

The SI & metadata DB 121 may be constructed in a Non-Volatile RAM (NVRAM) or a flash memory.

An IMS gateway 125 may be a gateway equipped with functions needed to access IMS-based IPTV services.

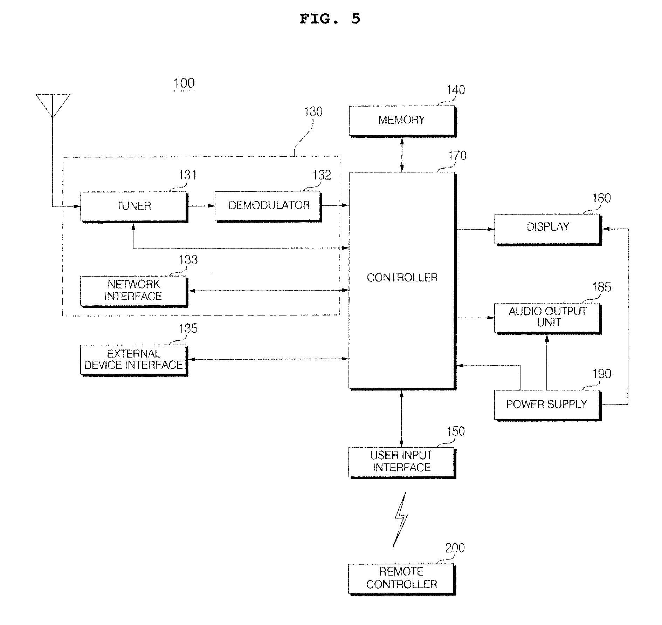

FIG. 5 is a detailed block diagram of a display apparatus according to an embodiment. Other embodiments and configurations may also be provided.

As shown in FIG. 5, the display apparatus 100 may include a broadcasting receiver 130, an external device interface 135, a memory 140 (or storage device), a user input interface 150, a controller 170, a display 180, an audio output unit 185 and a power supply 190. The broadcasting receiver 130 may include a tuner 131, a demodulator 132 and a network interface 133.

The tuner 131 may select a Radio Frequency (RF) broadcast signal corresponding to a channel selected by a user from among a plurality of RF broadcast signals received through an antenna and downconvert the selected RF broadcast signal into a digital Intermediate Frequency (IF) signal or an analog baseband A/V signal.

For example, if the selected RF broadcast signal is a digital broadcast signal, the tuner 131 downconverts the selected RF broadcast signal into a digital IF signal DIF. On the other hand, if the selected RF broadcast signal is an analog broadcast signal, the tuner 131 downconverts the selected RF broadcast signal into an analog baseband A/V signal, CVBS/SIF.

That is, the tuner 131 may be a hybrid tuner capable of processing not only digital broadcast signals, but also analog broadcast signals. The analog baseband A/V signal CVBS/SIF may be directly input to the controller 170.

The tuner 131 may be capable of receiving RF broadcast signals from an Advanced Television Systems Committee (ATSC) single-carrier system or from a Digital Video Broadcasting (DVB) multi-carrier system.

The tuner 131 may sequentially select a number of RF broadcast signals corresponding to all broadcast channels previously stored in the display apparatus 100 by a channel add function from a plurality of RF signals received through the antenna and may downconvert the selected RF broadcast signals into IF signals or baseband A/V signals.

The tuner 131 may tune to a channel of a broadcast signal.

The demodulator 132 may receive the digital IF signal DIF from the tuner 131 and may demodulate the digital IF signal DIF. For example, if the digital IF signal DIF is an ATSC signal, the demodulator 132 may perform 8-Vestigal SideBand (VSB) demodulation on the digital IF signal DIF.

The demodulator 132 may also perform channel decoding. For channel decoding, the demodulator 132 may include a Trellis decoder (not shown), a de-interleaver (not shown) and a Reed-Solomon decoder (not shown) so as to perform Trellis decoding, de-interleaving and Reed-Solomon decoding.

For example, if the digital IF signal DIF is a DVB signal, the demodulator 132 may perform Coded Orthogonal Frequency Division Multiple Access (COFDMA) demodulation upon the digital IF signal DIF.

The demodulator 132 may also perform channel decoding. For channel decoding, the demodulator 132 may include a convolution decoder (not shown), a de-interleaver (not shown), and/or a Reed-Solomon decoder (not shown) so as to perform convolution decoding, de-interleaving, and/or Reed-Solomon decoding.

The demodulator 132 may perform demodulation and channel decoding on the digital IF signal DIF, thereby obtaining a stream signal TS. The stream signal TS may be a signal in which a video signal, an audio signal and a data signal are multiplexed.

For example, the stream signal TS may be an MPEG-2 TS in which an MPEG-2 video signal and a Dolby AC-3 audio signal are multiplexed. An MPEG-2 TS may include a 4-byte header and a 184-byte payload.

In order to properly handle not only ATSC signals but also DVB signals, the demodulator 132 may include an ATSC demodulator and a DVB demodulator.

The stream signal TS may be input to the controller 170 and may thus be subjected to demultiplexing and A/V signal processing. The processed video and audio signals may be output to the display 180 and the audio output unit 185, respectively.

The external device interface 135 may serve as an interface between an external device and the display apparatus 100. For interfacing, the external device interface 135 may include an A/V Input/Output (I/O) unit (not shown) and/or a wireless communication module (not shown).

The external device interface 135 may be connected to an external device such as a Digital Versatile Disk (DVD) player, a Blu-ray player, a game console, a camera, a camcorder, or a computer (e.g., a laptop computer), wirelessly or by wire.

The external device interface 135 may externally receive video, audio, and/or data signals from the external device and transmit the received input signals to the controller 170. Additionally, the external device interface 135 may output video, audio, and data signals processed by the controller 170 to the external device.

The A/V I/O unit of the external device interface 135 may include a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, and a D-sub port.

The wireless communication module of the external device interface 135 may perform short-range wireless communication with other electronic devices. For short-range wireless communication, the wireless communication module may use Bluetooth, Radio-Frequency IDentification (RFID), Infrared Data Association (IrDA), Ultra WideBand (UWB), ZigBee, and/or Digital Living Network Alliance (DLNA).

The external device interface 135 may be connected to various set-top boxes through at least one of the above-described ports and may thus receive data from or transmit data to the various set-top boxes.

The external device interface 135 may receive applications or an application list from an adjacent external device and may provide the applications or the application list to the controller 170 or the memory 140.

The network interface 133 may serve as an interface between the display apparatus 100 and a wired/wireless network such as the Internet. The network interface 133 may include an Ethernet port for connection to a wired network. The wireless communication module of the external signal I/O unit 128 may wirelessly access the Internet. For connection to wireless networks, the network interface 133 may use Wireless Local Area Network (WLAN) (i.e., Wi-Fi), Wireless Broadband (WiBro), World Interoperability for Microwave Access (WiMax), and/or High Speed Downlink Packet Access (HSDPA), for example.

The network interface 133 may transmit data to or receive data from another user or electronic device over a connected network or another network linked to the connected network.

The network interface 133 may transmit data stored in the display apparatus 100 to a user or electronic device selected from among users or electronic devices pre-registered with the display apparatus 100.

The network interface 133 may access a specific Web page over a connected network or another network linked to the connected network. That is, the network interface 133 may access a specific Web page over a network and transmit or receive data to or from a server.

Additionally, the network interface 133 may receive content or data from a CP or an NP. The network interface 133 may receive content such as movies, advertisements, games, VoD files, and broadcast signals, and/or information related to the content from a CP or an NP.

The network interface 133 may receive update information about firmware and update files of the firmware from the NP. The network interface 133 may transmit data over the Internet or to the CP or the NP.

The network interface 133 may selectively receive a desired application from among open applications over a network.

The memory 140 may store software for operation of the display apparatus 100, for example, various programs necessary for the controller 170 to process and control signals, and may also store processed video, audio and data signals.

The memory 140 may temporarily store a video, audio and/or data signal received from the external device interface 135 or the network interface 133. The memory 140 may store information about broadcast channels by the channel-add function.

The memory 140 may store applications or a list of applications received from the external device interface 135 or the network interface 133.

The memory 140 may include, for example, at least one of a flash memory-type storage medium, a hard disk-type storage medium, a multimedia card micro-type storage medium, a card-type memory (e.g. a Secure Digital (SD) or eXtreme Digital (XD) memory), a Random Access Memory (RAM), and/or a Read-Only Memory (ROM) such as an Electrically Erasable and Programmable Read Only Memory.

The display apparatus 100 may reproduce content stored in the memory 140 (e.g. video files, still image files, music files, text files, and application files) to the user.

The user input interface 150 may transmit a signal received from the user to the controller 170 or transmit a signal received from the controller 170 to the user. For example, the user input interface 150 may receive various user input signals such as a power-on/off signal, a channel selection signal, and a screen setting signal from a remote controller 200 or may transmit a signal received from the controller 170 to the remote controller 200, according to various communication schemes, for example, RF communication and IR communication.

The user input interface 150 may provide the controller 170 with user input signals or control signals received from local keys (not shown), such as inputs of a power key, a channel key, and a volume key, and setting values.

For example, the user input interface 150 may transmit a control signal received from a sensor unit (not shown) for sensing a user gesture to the controller 170 or transmit a signal received from the controller 170 to the sensor unit. The sensor unit may include a touch sensor, a voice sensor, a position sensor, a motion sensor, etc.

The user input interface 150 may be a wireless input interface to receive signals from a wireless remote control device.

The controller 170 may demultiplex the stream signal TS received from the tuner 131, the demodulator 132, and/or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be output to the audio output unit 185. The audio signal processed by the controller 170 may be transmitted to the external output device through the external device interface 135.

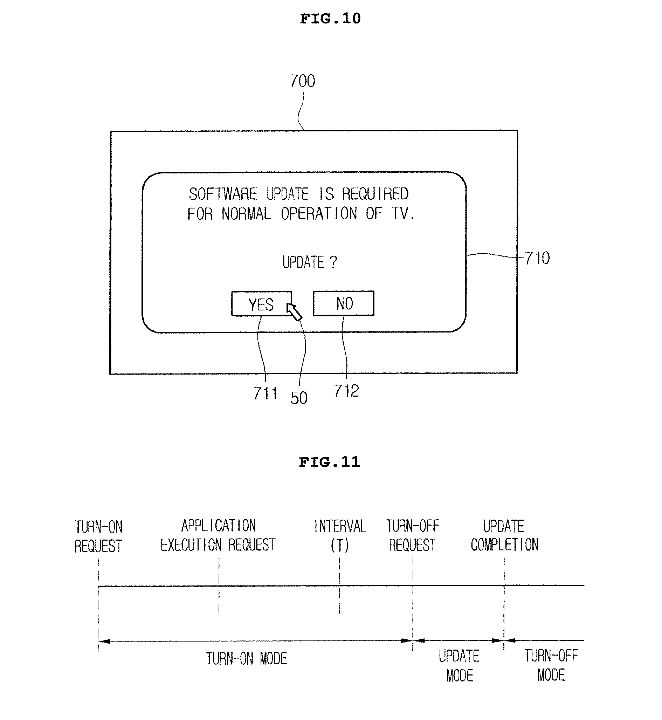

While not shown in FIG. 5, the controller 170 may include a DEMUX and a video processor, which may be described below with reference to FIG. 10.

The controller 170 may provide overall control to the display apparatus 100. For example, the controller 170 may control the tuner 131 to select an RF broadcast signal corresponding to a user-selected channel or a pre-stored channel.

The controller 170 may control the display apparatus 100 based on a user command received through the user input interface 150 and/or based pm an internal program. The controller 170 may access a network and download an application or application list selected by the user to the display apparatus 100 over the network.

For example, the controller 170 may control the tuner 131 to receive a channel selected according to a specific channel selection command received through the user input interface 150 and process a video, audio and/or data signal of the selected channel.

The controller 170 may output the processed video or audio signal along with information about the user-selected channel to the display 180 or the audio output unit 185.

The controller 170 may output a video or audio signal received from an external device such as a camera or a camcorder through the external device interface 135 to the display 180 or the audio output unit 185 based on an external device video playback command received through the external device interface 150.

The controller 170 may control the display 180 to display images. For example, the controller 170 may control the display 180 to display a broadcast image received from the tuner 131, an external input image received through the external device interface 135, an image received through the network interface 133, and/or an image stored in the memory 140. The image displayed on the display 180 may be a Two-Dimensional (2D) or Three-Dimensional (3D) still image or moving picture.

The controller 170 may control content playback. The content may include any content stored in the display apparatus 100, received broadcast content, and/or external input content. The content may include at least one of a broadcast image, an external input image, an audio file, a still image, a Web page, and/or a text file.

Upon reception of a go-to-home input, the controller 170 may control display of the home screen on the display 180.

The home screen may include a plurality of card objects classified based on content sources. The card objects may include at least one of a card object representing a thumbnail list of broadcast channels, a card object representing a broadcast program guide, a card object representing a program reservation list or a program recording list, or a card object representing a media list of a device connected to the display apparatus 100. The card objects may further include at least one of a card object representing a list of connected external devices or a card object representing a call-associated list.

The home screen may further include an application menu with at least one application that can be executed.

Upon reception of a card object move input, the controller 170 may control movement of a card object corresponding to the card object move input on the display 180, or if the card object is not displayed on the display 180, the controller 170 may control display of the card object on the display 180.

When a card object is selected from among the card objects on the home screen, the controller 170 may control display of an image corresponding to the selected card object on the display 180.

The controller 170 may control display of an input broadcast image and an object representing information about the broadcast image in a card object representing broadcast images. The broadcast image may be fixed in size through lock setting.

The controller 170 may control display of a set-up object for at least one of image setting, audio setting, screen setting, reservation setting, setting of a pointer of the remote controller, and/or network setting on the home screen. The controller 170 may control display of a log-in object, a help object, and/or an exit object on a part of the home screen.

The controller 170 may control display of an object representing a total number of available card objects or a number of card objects displayed on the display 180 from among all card objects, on a part of the home screen.

If one of the card objects displayed on the display 180 is selected, the controller 170 may fullscreen the selected card object to cover an entirety of the display 180.

Upon reception of an incoming call at a connected external device or the display apparatus 100, the controller 170 may control focusing-on or shift of a call-related card object from among the plurality of card objects.

If an application view menu item is selected, the controller 170 may control display of applications or a list of applications that are available in the display apparatus 100 or downloadable from an external network.

The controller 170 may control installation and execution of an application downloaded from the external network along with various UIs. The controller 170 may control display of an image related to the executed application on the display 180, upon user selection.

The display apparatus 100 may further include a channel browsing processor (not shown) for generating thumbnail images corresponding to channel signals or external input signals. Thumbnail images and/or thumbnail lists may be described in U.S. Application 12/651,730, filed January 4, 2010, the subject matter of which is incorporated herein by reference.

The channel browsing processor may extract some of the video frames of each of stream signals TS received from the demodulator 132 or stream signals received from the external device interface 135 and display the extracted video frames on the display 180 as thumbnail images.

The thumbnail images may be directly output to the controller 170 or may be output after being encoded. The thumbnail images may also be encoded into a stream and the stream may be output to the controller 170.

The controller 170 may display a thumbnail list including a plurality of received thumbnail images on the display 180. The thumbnail images may be updated sequentially or simultaneously in the thumbnail list. Therefore, the user can readily identify content of broadcast programs received through a plurality of channels.

The display 180 may convert a processed video signal, a processed data signal, and an OSD signal received from the controller 170 or a video signal and a data signal received from the external device interface 135 into RGB signals, thereby generating driving signals.

The display 180 may be various types of displays such as a Plasma Display Panel (PDP), a Liquid Crystal Display (LCD), an Organic Light-Emitting Diode (OLED) display, a flexible display, and/or a 3D display. The display 180 may also be a touch screen that can be used not only as an output device, but also as an input device.

The audio output unit 185 may receive a processed audio signal (e.g., a stereo signal, a 3.1-channel signal or a 5.1-channel signal) from the controller 170 and output the received audio signal as sound. The audio output unit 185 may employ various speaker configurations.

The display apparatus 100 may further include a camera unit (not shown) for capturing images of a user. Image information captured by the camera unit may be input to the controller 170.

The controller 170 may sense a user gesture from an image captured by the camera unit or a signal sensed by the sensor unit, and/or by combining the captured image and the sensed signal.

The power supply 190 may supply power to the display apparatus 100. More particularly, the power supply 190 may supply power to the controller 170, the display 180, and the audio output unit 185, which may be implemented as a System On Chip (SOC).

For supplying power, the power supply 190 may include a converter (not shown) for converting Alternating Current (AC) into Direct Current (DC). If the display 180 is configured with, for example, a liquid crystal panel having a plurality of backlight lamps, the power supply 190 may further include an inverter (not shown) capable of performing Pulse Width Modulation (PWM) for luminance change or dimming driving.

The remote controller 200 may transmit a user input to the user input interface 150. For transmission of user input, the remote controller 200 may use various communication techniques such as Bluetooth, RF communication, IR communication, UWB and/or ZigBee.

Additionally, the remote controller 200 may receive a video signal, an audio signal or a data signal from the user input interface 150 and output the received signals visually, audibly and/or as vibrations.

The display apparatus 100 may be a fixed digital broadcast receiver capable of receiving at least one of ATSC (8-VSB) broadcast programs, DVB-T (COFDM) broadcast programs, and/or ISDB-T (BST-OFDM) broadcast programs.

The display apparatus 100 shown in FIG. 5 may be purely exemplary. Depending upon specifications of the display apparatus 100 in actual implementation, components of the display apparatus 100 may be combined or omitted or new components may be added.

That is, two or more components may be incorporated into one component or one component may be configured as separate components, as needed. Additionally, the function of each block may be described for purpose of describing embodiments of the present invention and thus specific operations or devices should not be construed as limiting the scope and spirit of embodiments.

Unlike the configuration shown in FIG. 5, the display apparatus 100 may be configured so as to receive and playback video content through the network interface 133 or the external device interface 135, without the tuner 100 and the demodulator 132.

The display apparatus 100 may be separated to an image processing apparatus (for example, a set-top box) for receiving a broadcasting signal or contents according to various network services and a contents player for playing the contents from the image processing apparatus.

A method for providing a network service based on an embodiment may be performed by one of the image processing apparatus such as the set-top box and contents player that includes the display 180 and the audio output unit 185.

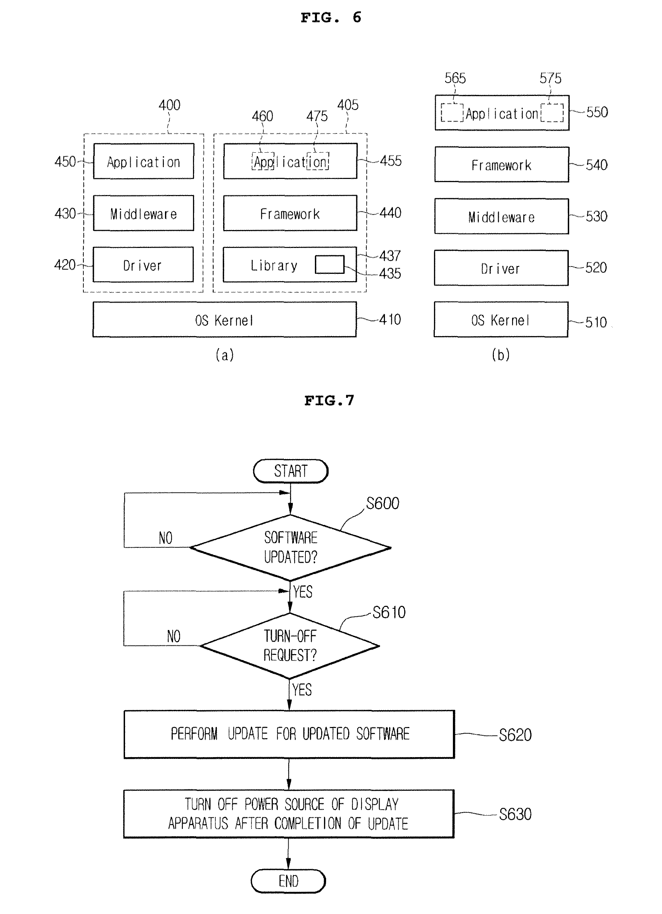

FIG. 6 illustrates platform architecture for the display apparatus 100. The platform for the display apparatus 100 may have OS-based software to implement the above-described various operations according to an embodiment.

Referring to FIG. 6 (a), a platform for the display apparatus 100 may be a separate type. The platform may be designed separately as a legacy system platform 400 and a smart system platform 405.

An OS kernel 410 may be shared between the legacy system platform 400 and the smart system platform 405. The legacy system platform 400 may include a stack of a driver 420, middleware 430, and an application layer 450 on the OS kernel 410.

On the other hand, the smart system platform 405 may include a stack of a library 435, a framework 440, and an application layer 455 on the OS kernel 410.

The OS kernel 410 may be the core of an operating system. When the display apparatus is driven, the OS kernel 410 may be responsible for operation of at least one of hardware drivers, security protection for hardware and processors in the display apparatus, efficient management of system resources, memory management, hardware interfacing by hardware abstraction, multi-processing, or scheduling associated with the multi-processing. Meanwhile, the OS kernel 410 may further perform power management.

The hardware drivers of the OS kernel 410 may include, for example, at least one of a display driver, a Wi-Fi driver, a Bluetooth driver, a USB driver, an audio driver, a power manager, a binder driver, and/or a memory driver.

Alternatively or additionally, hardware drivers of the OS kernel 410 may be drivers for hardware devices within the OS kernel 410. The hardware drivers may include a character device driver, a block device driver, and a network device driver.

The block device driver may need a buffer for buffering data on a block basis because data is transmitted on a block basis. The character device driver may not need a buffer since data is transmitted based on a basic data unit (i.e., on a character basis).

The OS kernel 410 may be implemented based on any of various OSs such as Unix (Linux), Windows, etc. The OS kernel 410 may be a general-purpose open OS kernel that can be implemented in other electronic devices.

The driver 420 may be provided between the OS kernel 410 and the middleware 430. Along with the middleware 430, the driver 420 may drive devices for operations of the application layer 450.

For example, the driver 420 may include a driver(s) for a microcomputer, a display module, a Graphic Processing Unit (GPU), the FRC, a General-Purpose Input/Output (GPIO) pin, a High-Definition Multimedia Interface (HDMI), a System Decoder (SDEC) or DEMUX, a Video Decoder (VDEC), an Audio Decoder (ADEC), a Personal Video Recorder (PVR), and/or an Inter-Integrated Circuit (I2C). These drivers may operate in conjunction with the hardware drivers of the OS kernel 410.

The driver 420 may further include a driver for the remote controller 200, especially a pointing device to be described below. The remote controller driver may reside in the OS kernel 410 or the middleware 430, rather than the driver 420.

The middleware 430 may reside between the OS kernel 410 and the application layer 450. The middleware 430 may mediate between different hardware devices or different software programs, for data transmission and reception between the hardware devices or the software programs. The middleware 430 may provide standard interfaces, support various environments, and enable interaction between tasks conforming to heterogeneous communication protocols.

Examples of the middleware 430 in the legacy system platform 400 may include Multimedia and Hypermedia information coding Experts Group (MHEG) and Advanced Common Application Platform (ACAP) as data broadcasting-related middleware, PSIP or SI middleware as broadcasting information-related middleware, and DLNA middleware as peripheral device communication-related middleware.

The application layer 450 that runs atop the middleware 430 in the legacy system platform 400 may include UI applications associated with various menus in the display apparatus, for example.

The application layer 450 may allow editing and updating over a network by user selection. With use of the application layer 450, the user may enter a desired menu from among various UIs by manipulating the remote controller 200 while viewing a broadcast program.

The application layer 450 may further include at least one of a TV guide application, a Bluetooth application, a reservation application, a Digital Video Recorder (DVR) application, and a hotkey application.

In the smart system platform 405, the library 435 may be positioned between the OS kernel 410 and the framework 440, forming the basis of the framework 440. For example, the library 435 may include Secure Socket Layer (SSL) being a security-related library, WebKit being a Web engine-related library, c library (libc), and Media Framework being a media-related library specifying, for example, a video format and an audio format. The library 435 may be written in C or C++. The library 435 may also be exposed to a developer through the framework 440.

The library 435 may include a runtime 437 with a core Java library and a Virtual Machine (VM). The runtime 437 and the library 435 may form the basis of the framework 440.

The VM may be a virtual machine that enables concurrent execution of a plurality of instances (i.e., multi-tasking). For each application of the application layer 455, a VM may be allocated and executed. For scheduling or interconnection between instances, the binder driver (not shown) of the OS kernel 410 may operate.

The binder driver and the runtime 437 may connect Java applications to C-based libraries. The library 435 and the runtime 437 may correspond to the middleware 430 of the legacy system platform 400.

In the smart system platform 405, the framework 440 may include programs on which applications of the application layer 455 are based. The framework 440 may be compatible with any application and may allow component reuse, movement and/or exchange.

The framework 440 may include supporting programs and programs for interconnecting different software components. For example, the framework 440 may include an activity manager related to activities of applications, a notification manager, and a CP for abstracting common information between applications.

The application layer 455 on top of the framework 440 may include a variety of programs that are executed and displayed in the display apparatus 100. The application layer 455 may include, for example, a core application that is a suit having at least one solution of e-mail, Short Message Service (SMS), calendar, map, or browser.

This framework 440 or the application layer 455 may be written in Java.

In the application layer 455, applications may be categorized into user-undeletable applications 465 stored in the display apparatus 100 that can not be modified and user-installable or user-deletable applications 475 that are downloaded from an external device or a network and stored in the display apparatus 100.

With the applications of the application layer 455, a variety of functions such as Internet telephony, VoD, Web album, Social Networking Service (SNS), Location-Based Service (LBS), map service, Web browsing, and application search may be performed through network access. In addition, other functions such as gaming and schedule management may be performed by the applications.

Referring to FIG. 6(b), a platform for the display apparatus 100 may be an integrated type. The integrated platform may include an OS kernel 510, a driver 520, middleware 530, a framework 540, and an application layer 550.

Compared to the separate-type platform shown in FIG. 6(a), the integrated-type platform shown in FIG. 6 (b) may be characterized by absence of the library 435 and the application layer 550 being an integrated layer. The driver 520 and the framework 540 correspond to the driver 420 and the framework 440 of FIG. 6(a), respectively.

The platforms shown in FIGs. 6 (a) and 6 (b) may be general-purpose platforms that may be implemented in many other electronic devices as well as in display apparatuses. The platforms may be stored or loaded in the memory 140 or the controller 170 shown in FIG. 5, or any other processor (not shown).

The platforms may be stored or loaded in SI & metadata DataBase (DB) 121, a User Interface (UI) manager 124, or a service manager 123 shown in FIG. 4, or any other application processor (not shown) may be included for running an application.

FIG. 7 is a flowchart of a software update (or upgrade) method of a display apparatus according to an embodiment of the present invention. Other operations, orders of operations and embodiments may also be provided. The software update method may be described below with reference to FIG. 7 and with the configuration of the display apparatus 100 in FIG. 5.

As shown in FIG. 7, the controller 170 of the display apparatus 100 may determine whether software is to be updated in operation S600.

For example, the memory 140 may store software necessary for operation of the display apparatus 100, and the software may include firmware for operation of the display apparatus 100 or an application program that is installed in the display apparatus 100.

The controller 170 may search the memory 140 to determine whether currently-installed software is to be updated, and when the software is to be updated, the updating (or upgrading) of corresponding software may be required.

In an embodiment of the software update method, an Over Air Download (OAD) scheme may be used that extracts updated software from a broadcasting signal that is received by the tuner 131 and that updates the software.

In the OAD scheme, updated software included in a corresponding broadcasting signal may be received and may be stored in the memory 140 while a user is viewing a broadcasting program.

For example, the controller 170 may compare software stored in the memory 140 and currently-installed software, and when the software stored in the memory 140 is a more recent version than the currently-installed software, the controller 170 may determine that the software is to be updated.

In another embodiment, the display apparatus 100 may download updated software from a server that is accessed through the network interface 133.

For example, the controller 170 may compare software provided from the access server and the currently-installed software, and when the software from the server is a more recent version than the currently-installed software, the controller 170 may determine that the software should be updated.

The controller 170 may request the updated software to the server through the network interface 133 and may download the updated software.

When the software is an application program, the controller 170 may access a content provider server, which provides the application, through the network interface 133 and may determine whether a corresponding application is to be updated. When the application is to be updated, the controller 170 may download an updated application program from the content provider server.

As described above, determining whether to update software may be performed upon a turn-on request (or a turn-off request) to the display apparatus 100, or may be performed at prescribed intervals.

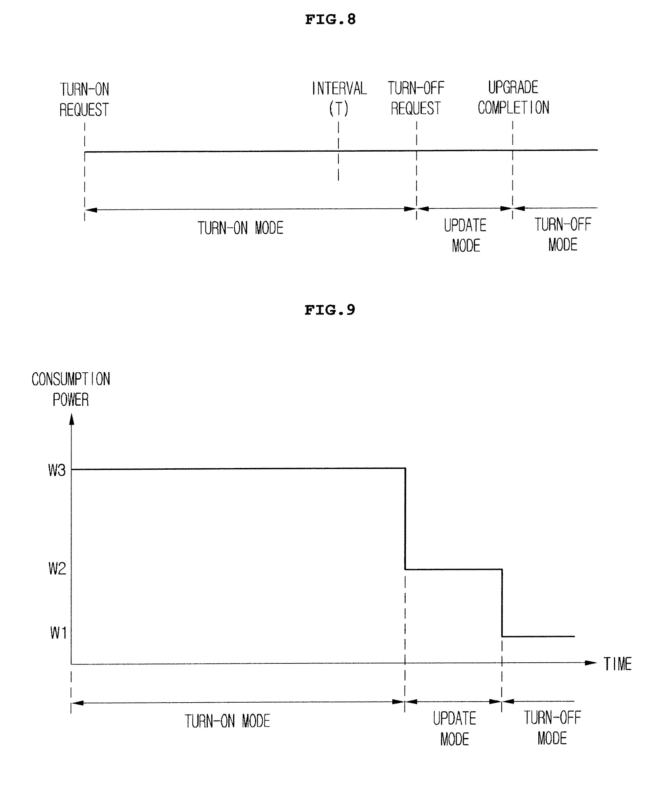

Referring to FIG. 8, when a user requests the turn-on of the display apparatus 100 with the remote controller 200, the display apparatus 100 may receive a turn-on signal through the user interface 150, and the controller 170 may perform operation S610 (i.e., determine whether to update the software in response to the received turn-on signal).

Alternatively, when the user requests the turn-off of the display apparatus 100 with the remote controller 200, the display apparatus 100 may receive a turn-off signal through the user interface 150, and the controller 170 may perform operation S610 in response to the received turn-off signal.

A software update determination interval T may be preset. While the display apparatus 100 is turned on, the controller 170 may perform operation S610 at a time corresponding to the determination interval T.

For example, when the software update determination interval T is set to two days, the controller 170 may perform operation S610 every two days to determine whether to update the software.

When the software has been updated, information on the updated software is stored in the memory 140.

The software information stored in the memory 140 may be identification information of the updated software, and the identification information may include a name, a version information and/or location information, such as Uniform Resource Locator (URL) of corresponding software.

The display apparatus 100 may download the updated software at a desired time with the software identification information stored in the memory 140.

Alternatively, the software information stored in the memory 140 may be the updated software itself.

Subsequently, when there is a turn-off request to the display apparatus 100 (in operation S610), the updated software may be further updated (in operation S620).

For example, when the user requests the turn-off of the display apparatus 100 with the remote controller 200, the display apparatus 100 may receive a turn-off signal through the user interface 150, and the controller 170 may perform updating for the updated software in response to the received turn-off signal.

As shown in FIG. 8, the operation mode of the display apparatus 100 may be divided into a turn-on mode from the turn-on request time of the user to the turn-off request time of the user, an update (or upgrade) mode from the turn-off request time to a software update completion time, and a turn-off mode after the software update completion time.

In response to the turn-off request, the controller 170 may change the operation mode of the display apparatus 100 to the update mode, and perform a software update with the software information stored in the memory 140.

In the update mode, the controller 170 may control the display 180 for an image-displaying screen to be turned off (or powered OFF). For this, the controller 170 may shut off (or turn OFF) a power source that is supplied from the power supply 190 to the display 180.

Therefore, when the user requests the turn-off of the display apparatus 100, the screen of the display apparatus 100 may be turned off and thus the display apparatus 100 may be viewed by the user as being turned off, although the software update of the display apparatus 100 may be continuously performed. The controller 170 may provide the display apparatus 100 in the update mode in response to the display apparatus receiving a turn-off request. In the update mode, the display apparatus 100 receives updated software and power to the display 180 is OFF.

The following description may relate to embodiments of a method where the controller 170 performs software update in the update mode.

When the updated software itself is stored in the memory 140, the controller 170 may read the updated software from the memory 140 and perform the software update.

When identification information on the updated software is stored in the memory 140, the controller 170 may download the updated software based on the software identification information stored in the memory 140 in the update mode, and then perform software update with the downloaded software.

For example, the controller 170 may read the URL information of the updated software from the memory 140, perform control for the network interface 133 to access a server corresponding to the URL and download the updated software from the server, and then perform software update with the downloaded software.

In the update mode, a power source may not be supplied to the external device interface 135, the display 180 and the audio output unit 185 of the display apparatus 100, although only a power source for the above-described software update may be supplied to the broadcasting receiver 130, the memory 140, the user interface 150 and/or the controller 170 from the power supply 190.

The software update may be completed, and thereafter the controller 170 may turn off the power source of the display apparatus 100 (in operation S630).

For example, the software update may be completed in the update mode, and thereafter the controller 170 may change the operation mode of the display apparatus 100 to the turn-off mode and thus perform control for a power source not to be supplied from the power supply 190 to other modules of the display apparatus 100.

In the turn-off mode, a power source is not supplied to the broadcasting receiver 130, the external device interface 135, the memory 140, the display 180 and the audio output unit 185 of the display apparatus 100, although only a minimum power source for reception of a control signal from the user such as a turn-on signal may be supplied from the power supply 190 to the user interface 150 or the controller 170.

FIG. 9 is a graph showing an embodiment of a consumption power of a display apparatus. Other embodiments and configurations may also be provided.

As shown in FIG. 9, a power consumed in the display apparatus 100 may decrease over time in an order of the turn-on mode, the update mode and the turn-off mode.

For example, a power source is supplied to all the modules of the display apparatus 100 in the turn-on mode, but in the update mode, the power source may be supplied only to the broadcasting receiver 130, the memory 140, the user interface 150 and/or the controller 170 for updating of software.

Therefore, as shown in FIG. 9, a consumption power W2 of the display apparatus 100 in the update mode may be less than a consumption power W1 in the turn-on mode.

Since only the minimum power source for receiving a control signal from the user is supplied to the user interface 150 or the controller 170 in the update mode, a consumption power W3 in the turn-off mode may be less than the consumption power W2 in the update mode.

The controller 170 may determine whether update for the software is necessarily required for operation of the display apparatus 100.

For example, the updated software may be a critical update that is necessarily required for operation of the display apparatus 100, and when software update based on the critical update is not performed, the display apparatus 100 may not operate normally.

As shown in FIG. 10, when there is a critical update of software that is necessarily required for operation of the display apparatus 100 as the result of operation S600, the display 180 may display a popup window 710 on a screen 700 for allowing the user to select whether to perform updating for the updated software.

When the user selects a YES button 711 on the displayed popup window 710, the controller 170 may perform updating for the updated software. After the software update is completed, the display apparatus 100 may operate normally.

When the user selects a NO button 712, the controller 170 does not perform update for the updated software, and therefore the display apparatus 100 may not operate normally.

As shown in FIG. 10, a pointer 50 that moves in response to motion of a user input means may be displayed on the screen 700, and therefore the pointer 50 may display a position to be pointed by the user through the input means.

The input means may be the remote controller 200 that is connected to the display apparatus 100 in a wired or wireless communication scheme, and/or a device that senses motion of a part of the body such as a finger or eyes of the user.

For example, the remote controller 200 may be an input means such as a remote controller or a mouse that may recognize motion of the user and transmit a signal corresponding to the motion to the display apparatus 100.

The display apparatus 100 may include a touch panel for sensing a position touched by a specific object or movement of the touched object, and thus the user may touch a screen with its finger or a specific object to perform the above-described pointing operation.

The display apparatus 100 may include a sensor (not shown) for sensing motion of the user's eyes, and therefore the display apparatus 100 may receive the above-described pointing operation according to motions of the user's eyes.

According to an embodiment, when update for the software having a critical update is not performed, the display apparatus 100 may automatically be turned off. As described above with reference to FIGs. 7 and 8, the display apparatus 100 may change to the update mode at the turn-off time and may perform update for the updated software.

The updated software may be an optional update that is not necessarily required for operation of the display apparatus 100, and when a software update based on the optional update is not performed, an additional function provided through the update may not be provided although the display apparatus 100 operates normally.

When there is the above-described optional update for specific software as a determined result of operation S600, as described above with reference to FIGs. 7 and 8, the controller 170 may change to the update mode upon the turn-off request of the user and perform update for the updated software.

Alternatively, when the optional update exists, the controller 170 may receive the user's selection on an update time or whether to perform update for the updated software through a popup window that is as shown in FIG. 10, and may perform update of corresponding software.

The following description may be provided with reference to FIGs. 11 to 18 relating to a method of performing update for applications that are installed in the display apparatus 100.

Referring to FIG. 11, whether to update a plurality of applications installed in the display apparatus 100, for example, all applications installed in the display apparatus 100 may be determined upon a turn-on request or a turn-off request from the user or at a determination time based on a predetermined interval T.

When at least one updated application from among the applications exists, a list for the updated application may be displayed on the screen 700.

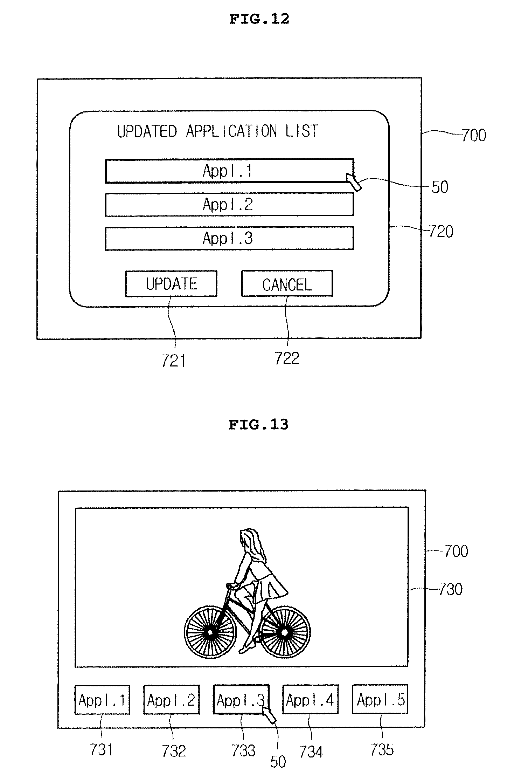

As shown in FIG. 12, when Appl.1, Appl.2 and Appl.3 from among the applications installed in the display apparatus 100 are updated, the display 180 may display a popup window 720 that displays a list of the updated applications on the screen 700.

A user may move the pointer 50 with the remote controller 200 to select at least one (for example, Appl.1) of the applications displayed on the screen 700, to select an update button 721, and thus allow update for the selected application to be performed.

When the update button 721 is selected, the user may additionally select a desired update time. The selectable update time may be a turn-on request time, a turn-off request time and/or a current time.

When the user selects a cancel button 722, update for the updated applications is not performed at a current time, and as described above with reference to FIGs. 7 and 8, the controller 170 may change to the update mode upon the turn-off request of the user and may perform update for the updated applications.

FIG. 13 illustrates an embodiment of a method for executing an application.

As shown in FIG. 13, the display apparatus 100 may display icons 731 to 735 on the screen 700 respectively corresponding to installed applications, for example, Appl.1 to Appl.5.

A user may select an icon corresponding to an application to be executed from among the application icons 731 to 735 that are displayed on the screen 700, and thus the controller 170 may execute an application corresponding to the selected icon.

The application icons 731 to 735 may be displayed on the screen 700 together with a channel or the image 730 of content that is selected by the user, and various texts or images may be displayed on the screen 700.

In the user interface of FIG. 13, a configuration or disposition for the application icons 731 to 735 and the display image 730 may change on the screen 730.

For example, a plurality of icons corresponding to applications that have been installed or may be installed in the display apparatus 100 may be divided into a plurality of groups according to an attribute of a corresponding application, each of the groups may be displayed in a card form on the screen 700.

When the user moves the pointer 50 to select the icon 733 corresponding to the Appl.3, the application may be executed when the Appl.3 is an application corresponding to the selected icon 733.

When the user requests execution of a specific application, the update of a corresponding application may be determined.

For example, in response to the execution request of the user for the Appl.3, the controller 170 may determine the update of the selected Appl.3.

Moreover, when the selected Appl.3 has been updated, the controller 170 may check whether the update is a critical update that is necessarily required for execution of the Appl.3. When update based on the critical update is not performed, the Appl.3 may not normally be executed.

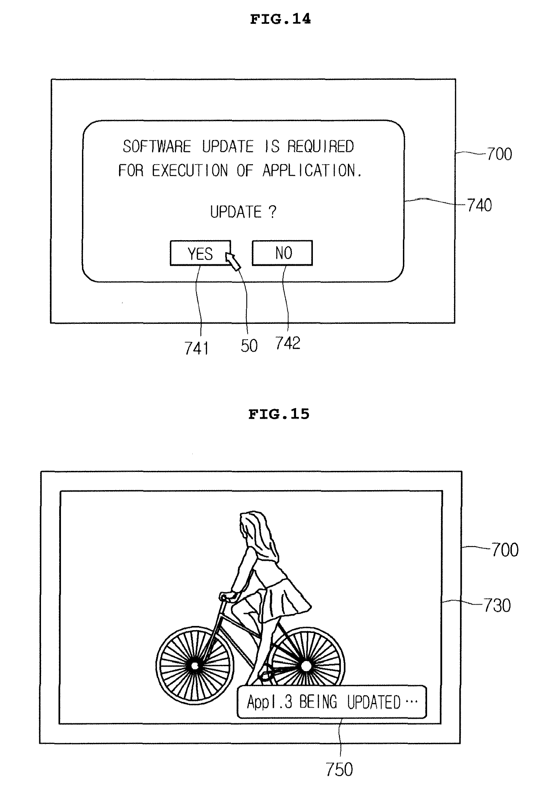

Referring to FIG. 14, when a critical update for the execution-requested Appl.3 exists, the display 180 may display a popup window 740 on the screen 700 indicating that a software update is required for execution of an application.

A user may move the pointer 50 to select a YES button 741, and thus an update for the updated Appl.3 is performed.

Referring to FIG. 15, while update of the Appl.3 is being performed, a popup window 750 may be displayed on the screen 700 indicating that the Appl.3 is being updated. Simultaneously, a specific content may be replayed.

For example, while the update is being performed, an image 730 that is displayed before selection of the application may be displayed on an entire area of the screen 700, thereby decreasing boredom of the user that may be caused during a delay time from the update of the Appl.3 to an execution time.

When update of the Appl.3 is completed, the controller 170 may execute the Appl.3.

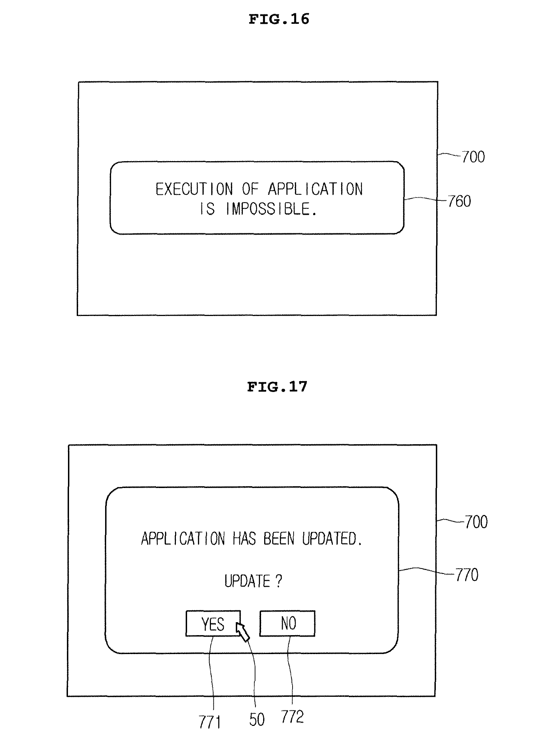

When the user selects a NO button 742 on the popup window 740, the controller 170 stops execution of the Appl.3, and as shown in FIG. 16, a popup window 760 indicating that it is impossible to execute an application may be displayed on the screen 700 according to control of the controller 170.

Update for the updated Appl.3 may be performed when there is a turn-off request from the user.

When the update of the Appl.3 is an optional update that is not necessarily required for execution of an application, and when an application update based on the optional update is not performed, an additional function provided through the update may not be provided although the Appl.3 operates normally.

Referring to FIG. 17, when an optional update for the execution-requested Appl.3 exists, the display 180 may display a popup window 770 on the screen 700 indicating that an application has been updated.

A user may move the pointer 50 to select a YES button 771 on the popup window 770, and thus allow updating for the updated Appl.3 to be performed.

Moreover, when the update of the Appl.3 is selected, the user may select a time when update for a corresponding application is performed.

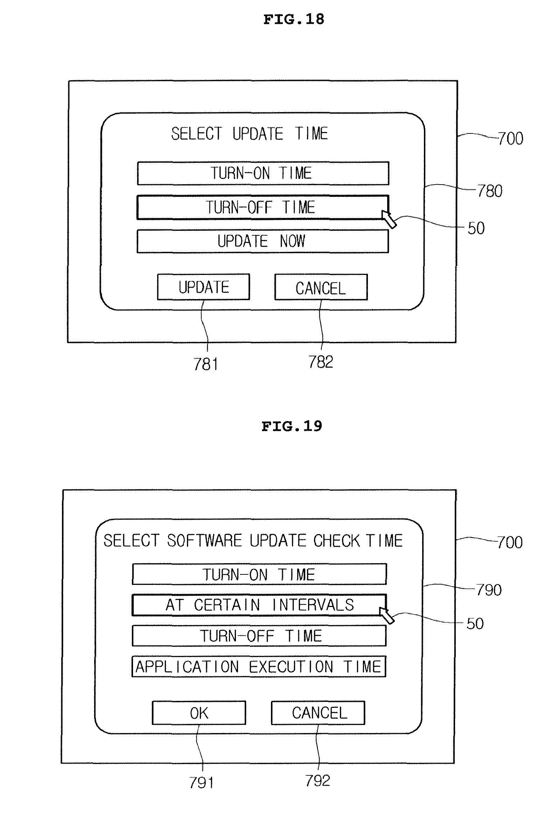

Referring to FIG. 18, the display 180 may display a popup window 780 on the screen 700 indicating update times for the update-selected Appl.3, for example, "turn-on time", "turn-off time" and "Update now".

A user may select the turn-on time on the popup window 780, and allow update for the Appl.3 to be performed at a time when the display apparatus 100 is turned on according to a next turn-on request.

The user may select the turn-off time on the popup window 780, and allow updating for the Appl.3 to be performed at a time when the display apparatus 100 is changed to the update mode according to a next turn-off request.

Alternatively, the user may select "Update now" on the popup window 780, and allow updating for the Appl.3 to immediately be performed at a current time.

Since the update of the Appl.3 is not necessarily required for execution of a corresponding application, even when the user selects a NO button 742 on the popup window 770 of FIG. 17 or selects the turn-on time or the turn-off time as an update time on the popup window 780 of FIG. 18, the controller 170 may execute the Appl.3.

The user may select a check time for whether to perform software update that is as described above with reference to FIGs. 8 and 11.

Referring to FIG. 19, the display 180 may display a popup window 790 on the screen 700 indicating update check times that are selectable by a user, such as "turn-on time", "at certain intervals", "turn-off time" and "application execution time".

The user may select the turn-on time on the popup window 790 and select an OK button 791 on the popup window 790. Thus, whether to perform update for software such as a firmware or an application that is installed in the display apparatus 100 may be checked at a time when the display apparatus 100 is turned on according to a turn-on request.

The user may select "at certain intervals" on the popup window 790, and thus whether to perform update for the software may be checked at certain intervals T.

As shown in FIG. 19, when the user performs selection for software update to be checked at certain intervals T, a menu may be activated for enabling the setting of the check interval T.

The user may select the turn-off time on the popup window 790, and whether to perform update for the software may be checked at a time when the display apparatus 100 is turned off according to a turn-off request.

The user may select the application execution time on the popup window 790, and thus when there is an execution request for a specific application, setting may be performed for enabling the check of whether to perform the update of a corresponding application.

Information on the software that has been updated in the above-described method may be provided to a user.

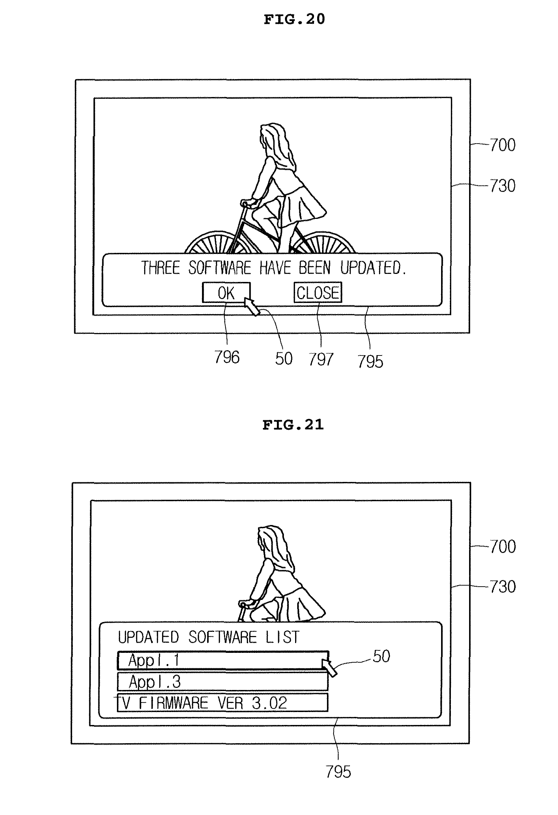

Referring to FIG. 20, at a time when the display apparatus 100 is turned on, a popup window 795 indicating information on updated software may be displayed on a screen 795.

For example, when the display apparatus 100 has been changed to the update mode and has performed updating for three software according to the turn-off request of a user, the popup window 795 indicating that the three software have been updated may be displayed at a time when the display apparatus 100 is turned on.

When the user selects an OK button 796 on the popup window 795, a list of the updated software may be displayed on the screen 700.

Referring to FIG. 21, a popup window 795 may display a list including TV firmware version 3.02, Appl.1 and Appl.3 that have been updated at a time when the display apparatus 100 was turned off before.

When a user selects one (for example, Appl.1) of the software included in the list with the pointer 50, the screen 700 may display detailed update information on the selected software.

Upon turn-off of the display apparatus 100, and in more detail, at an update mode based on the turn-off request of the user, various operations other than the above-described software update may be performed.

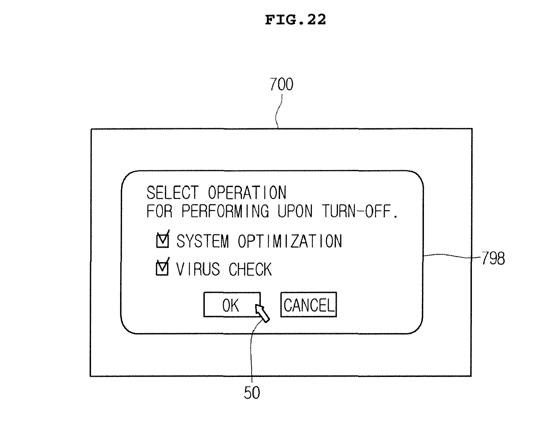

Referring to FIG. 22, when a user requests the turn-off of the display apparatus 100, the display apparatus 100 may change to the update mode and display a popup window 798 on the screen 700. The popup window 798 may allow the user to select an operation for performing.

When the user selects "system optimization", the controller 170 may perform operations for improving memory use or Internet access, for example, cleaning of system area, arbitrary Internet file or recently-used file/execution list, or works such as memory optimization and registry arrangement.

When the user selects "virus check", the controller 170 may perform a check and cure work on a virus-infected file or a malicious code by using a predetermined vaccine application upon turn-off of the display apparatus 100.

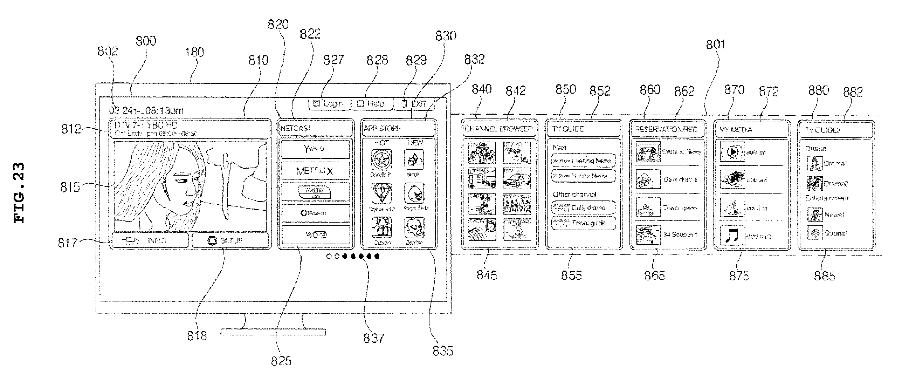

FIG. 23 is a diagram illustrating an embodiment of a home screen that is displayed in a display apparatus. Other embodiments and configurations may also be provided.

The configuration of a home screen in FIG. 23 may be an example of a basic screen configuration of the display apparatus 100. Such a screen may be set as an initial screen upon turn-on of a power source or upon turn-on in a standby mode, or may be set as a basic screen by operations of home keys included in the remote controller 200 or a local key (not shown).

A home screen 800 may include a card object area, which may include a plurality of card objects 810, 820 and 830 that are divided by sources of contents.

FIG. 23 illustrates a card object (BROADCAST) 810 indicating a broadcasting image, a card object (NETCAST) 820 indicating a content provider list and a card object (APP STORE) 830 indicating an application provider list, wherein the objects 810, 820 and 830 are displayed on the display 180.

In FIG. 23, a card object (CHANNEL BROWSER) 840 indicating the thumbnail list of a broadcasting channel, a card object (TV GUIDE) 850 indicating a broadcasting guide list, a card object (RESERVATION/REC) 860 indicating a broadcasting reservation list or a record list, a card object (MY MEDIA) 870 indicating a media list in a display apparatus or a device connected to the display apparatus, and a card object (TV GUIDE2) 880 indicating a broadcasting guide list are shown as a card object that is provided in a hidden area 801 and may be replaced and displayed in moving of the card object, although it is not displayed on the display 180.

The card object (BROADCAST) 810 indicating a broadcasting image may include a broadcasting image 815 that is received through the tuner 110 or the network interface 130, an object 812 indicating information related to a corresponding broadcasting image, an object 817 indicating an external device, and a setup object 818.

The broadcasting image 815 may be displayed as a card object, its size may be fixed by a lock function, and thus a user may continuously view the broadcasting image 815.

A size of the broadcasting image 815 may vary by manipulation of the user. For example, the size of the broadcasting image 815 may be enlarged or reduced by a drag using a pointer 205 of the remote controller 200. By such enlargement or reduction, as shown in FIG. 23, a number of objects displayed on the display 180 may be 2 or 4 other than 3.

When the broadcasting image 815 in the card object is selected, a corresponding broadcasting image may be displayed on the entire screen of the display 180.

The object 812 indicating information related to a corresponding broadcasting image may include a channel number (DTV7-1), a channel name (YBC HD), a broadcasting program name (Oh! Lady), and a broadcasting time (PM 08:00-08:50). Therefore, the user may intuitively determine information on the displayed broadcasting image 815.

In selecting of the object 812 indicating information related to a corresponding broadcasting image, relevant EPG information may be displayed on the display 180.

An object 802 indicating a date (03.24), a day (THU) and a current time (pm 08:13) may be displayed on the card object 810 indicating a broadcasting image. Therefore, the user may intuitively determine time information.

The object 817 indicating an external device may indicate an external device connected to the display apparatus 100. For example, the object 817 may show a list of an external device connected to the display apparatus 100 when being selected.

The setup object 818 may be used to input various settings of the display apparatus 100. For example, various settings such as an image setting, an audio setting, a screen setting, a reservation setting, a pointer setting of the remote controller 200 and/or a network setting may be performed.

The card object 820 indicating a content provider list may include a card object name (NETCAST) 822 and a content provider list 825. In FIG. 23, Yakoo, Metflix, weather.com, Picason and My tube may be shown as a content provider in the content provider list 825, although various setting may be performed.

When the card object name 822 is selected, the card object 820 may be displayed on the entire screen of the display 180.

When a content provider in the content provider list 825 is selected, the display 180 may display a screen including a content list that is provided by a corresponding content provider.

The card object 830 indicating an application providing list may include a card object name (APP STORE) 832 and an application list 835. The application list 835 may be a list that is classified and sorted by items in an application store. In FIG. 23, the application list 835 may be sorted and displayed in popular order (HOT) and new order (New), although it is not limited thereto.

When the card object name 832 is selected, the card object 830 may be displayed on the entire screen of the display 180.

When an application item in the application list 835 is selected, the display 180 may display a screen that provides information on a corresponding application.

A login item 827, a help item 828 and an exit item 829 may be displayed in an upper portion of the card objects 820 and 830.

The login item 827 may be used upon web store access or login of a network accessing the display apparatus 100. The help item 828 may be used for Help in operating of the display apparatus 100. At this point, a received broadcasting image may be displayed on an entire screen.

The object 837 indicating a total number of card objects may be displayed in the lower portion of the card objects 820 and 830. The object 837 may indicate the number of card objects that are displayed on the display 180 from among total card objects, in addition to the total number of card objects.

The card object 840 indicating the thumbnail list of a broadcasting channel may include a card object name (CHANNEL BROWSER) 842 and a thumbnail list 845 of a broadcasting channel. In FIG. 23, sequentially-received broadcasting channels are displayed as thumbnail images, although they are not limited thereto. The broadcasting channels may be displayed as moving images. The thumbnail list may include a thumbnail image and channel information of a corresponding channel. Therefore, the user may intuitively determine content of a corresponding channel.

The thumbnail image may be a thumbnail image for a preference channel that has been registered in advance by the user, or it may be a thumbnail image for a channel after or before the broadcasting image 815 in the card object 810. In FIG. 23, eight thumbnail images are shown, although various settings may be performed. Thumbnail images in the thumbnail list may be updated.

When the card object name 842 is selected, the card object 840 may be displayed on the entire screen of the display 180. That is, the display 180 may display content for a thumbnail list.

When a thumbnail image in the thumbnail list 845 of a broadcasting channel is selected, the display 180 may display a broadcasting image corresponding to a pertinent thumbnail image.

The card object 850 indicating a broadcasting guide list may include a card object name (TV GUIDE) 852 and a broadcasting guide list 855. The broadcasting guide list 855 may be a list for a broadcasting program after the broadcasting image 815 in the card object 810 or the broadcasting image of another channel, although it is not limited thereto. Various examples may be possible.

When the card object name 852 is selected, the card object 850 may be displayed on the entire screen of the display 180.

When a broadcasting item in the broadcasting guide list 855 is selected, the display 180 may display a broadcasting image corresponding to a pertinent broadcasting item, or may display broadcasting information corresponding to a pertinent broadcasting item.

The card object indicating a broadcasting reservation list or a record list may include a card object name (RESERVATION/REC) 862 and a broadcasting reservation list or a record list 865. The broadcasting reservation list or record list 865 may be a list including a broadcasting item that has been reserved and set by the user or a broadcasting item that has been recorded according to the reservation-set broadcasting item. FIG. 23 shows that thumbnail images are included by corresponding items, although various examples are possible.

When the card object name 862 is selected, the card object 860 may be displayed on the entire screen of the display 180.

When a reservation-preset broadcasting item or a recorded broadcasting item in the broadcasting reservation list or the record list 865 is selected, the display 180 may display broadcasting information or a recorded broadcasting image for pertinent broadcasting.

The card object 870 indicating a media list may include a card object name (MY MEDIA) 872 and a media list 875. The media list 875 may be a media list in the display apparatus 100 or a device connected to the display apparatus 100. In FIG. 23, a moving image, a still image and audio are shown, although various examples such as a text document and an e-book document are possible.

When the card object name 872 is selected, the card object 870 may be displayed on the entire screen of the display 180.

When a media item in the media list 875 is selected, a corresponding media may be executed, and the display 180 may display a screen corresponding to the media.

The card object (TV GUIDE) 880 indicating a broadcasting guide list may include a card object name (TV GUIDE2) 882 and a broadcasting guide list 885. The broadcasting guide list 885 may be a guide list by kinds of broadcasting. FIG. 23 shows lists by kinds of broadcasting by dividing drama, news or entertainment such as sports, although various settings may be performed. That is, the list may be a broadcasting guide list by kinds of broadcasting such as drama, movie, news, sports and animation. Therefore, the user may check guide lists that are divided by genres during broadcasting.

When the card object name 882 is selected, the card object 880 may be displayed on the entire screen of the display 180.

When a broadcasting item in the broadcasting guide list 885 is selected, the display 180 may display a screen corresponding to a pertinent broadcasting image.

The card objects 820 and 830 displayed on the display 180 and the card objects 840, 850, 860, 870 and 880 that are not displayed on the display 180 and are provided in the hidden area 801 may be replaced by each other through movement input of a card object.

That is, one of the card objects 820 and 830 displayed on the display 180 may move to the hidden area 801, and the display 180 may display at least one of the card objects 840, 850, 860, 870 and 880 provided in the hidden area 801.

A home screen 800 of the display apparatus 100 may further include a card object indicating information associated with a software update.

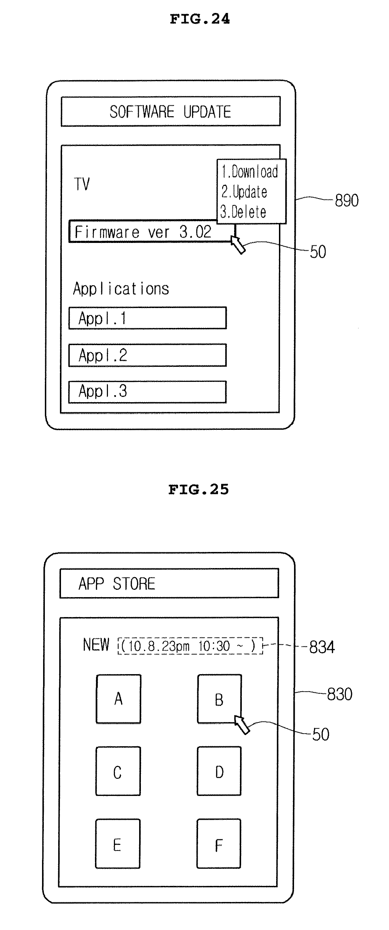

As shown in FIG. 24, a card object (SOFTWARE UPGRADE) 890 indicating software update information may include software requiring update (i.e., information on updated software).

The card object (SOFTWARE UPGRADE) 890 may display the updated software information, which is divided into software for internal operation of the display apparatus 100 and an application installed in the display apparatus 100 and displayed.

In the card object (SOFTWARE UPGRADE) 890 of FIG. 24, it is shown that firmware of the display apparatus 100 has been updated to Firmware ver 3.02 and Appl.1 to Appl.3 among installed applications have been updated.

A user may select at least one of software displayed in the card object (SOFTWARE UPGRADE) 890 and allow update for the selected software to be performed.

For example, when the user moves the pointer 50 to Firmware ver 3.02, the card object (SOFTWARE UPGRADE) 890 may display "Download", "Update" and "Delete" that correspond to functions to be performed for corresponding software.

When the user selects "Download", the updated Firmware ver 3.02 may be downloaded through the network interface 133 and may be stored in the memory 140. The controller 170 may perform software updating using the downloaded data at the turn-off time of the display apparatus 100.

When the user selects "Update", a download and update operation for the updated Firmware ver 3.02 may be immediately performed.

When the user selects "Delete", information on the updated Firmware ver 3.02 may be deleted from the card object (SOFTWARE UPGRADE) 890 and may no longer be displayed.

In the card object (APP STORE) 830 indicating the application providing list, when the user selects a NEW button, the display 180 may display information on applications that have recently been uploaded to a corresponding application providing server.

Referring to FIG. 25, the display 180 may display information on applications A to F that have newly been added to the card object (APP STORE) 830 after a specific time, for example, "10.8.23 pm 10:30".

The specific time may be a time when the user selected the NEW button of the card object (APP STORE) 830 most recently and checked a list of the newest applications, or a time when the display apparatus 100 was turned off most recently.

The user may select one of the newest applications displayed in the card object (APP STORE) 830 with the pointer 50 and install the selected application in the display apparatus 100.

The above-described software update operation may be performed by users using the display apparatus 100.

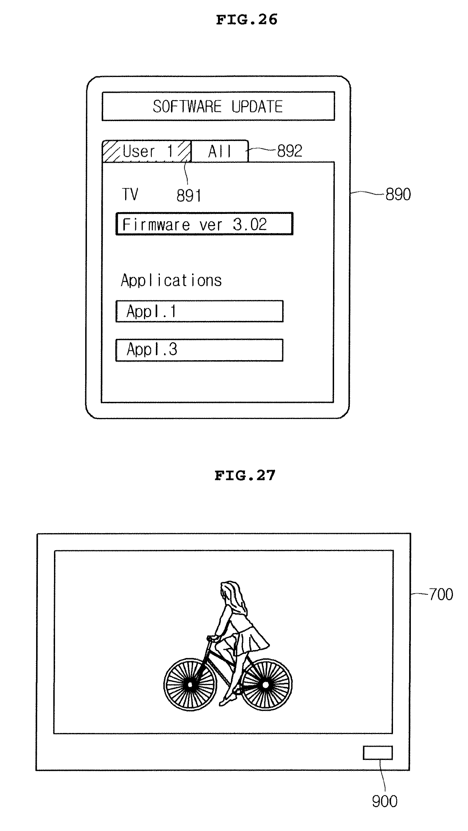

As shown in FIG. 26, when User1 is currently logged in to the display apparatus 100, update information on software related to the logged-in User1 may be displayed in the card object (SOFTWARE UPGRADE) 890.

For example, the card object (SOFTWARE UPGRADE) 890 may update information on software associated with internal operation of the display apparatus 100 and information on applications at use environment of the logged-in User1.

The applications at use environment of the logged-in User1 may be applications that have been installed, used or are managed by the User1, for example, may be the Appl.1 and Appl.3 of FIG. 26.

When the user selects an All button 892 displayed in the card object (SOFTWARE UPGRADE) 890, update-related information on all software installed in the display apparatus 100 may be displayed irrespective of the logged-in user.

FIGs. 27 to 30 are diagrams illustrating an embodiment of a user interface that is provided for update of software. Other embodiments and configurations may also be provided.

As shown in FIGs. 27 to 29, the display apparatus 100 may include a power status display unit 900 that has at least one light source, such as a Light Emitting Diode (LED).

The power status display unit 900 may indicate a power status of the display apparatus 100 by using colors or by turning on/off the light source. For example, the power status display unit 900 may display different colors according to operation modes (e.g. a turn-on mode, an update mode and a turn-off mode as shown in FIG. 8) of the display apparatus 100.

As shown in FIG. 27, when the display apparatus 100 is displaying a broadcast channel video, the power status display unit 900 may display a first color (e.g. green) for indicating that the display apparatus 100 is in the turn-on mode.

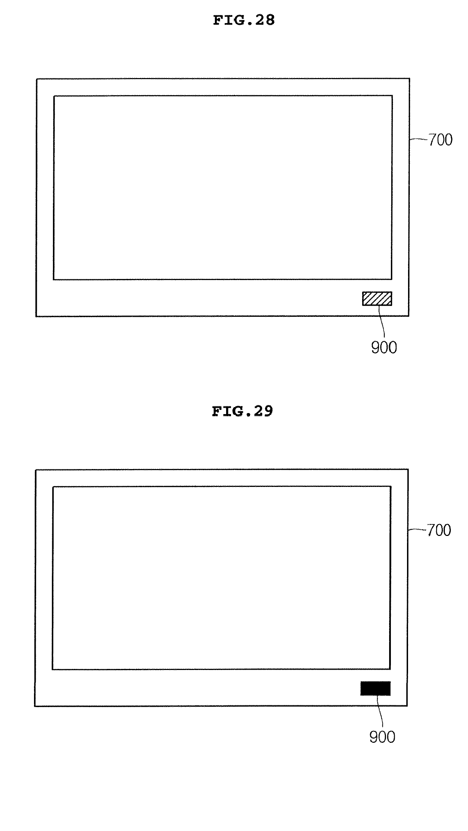

As shown in FIG. 28, when the display apparatus 100 is performing a software update, the power status display unit 900 may display a second color (e.g. yellow) for indicating that the display apparatus 100 is in the update mode.

For example, when the display apparatus 100 starts the software update in response to a user's turn-off request, a color that is emitted from the light source included in the power status display unit 900 is changed from the first color (e.g. green) to the second color (e.g. yellow).

As shown in FIG. 29, when the software update is completed, the power status display unit 900 may display a third color (e.g. red) for indicating that the display apparatus 100 is in the turn-off mode.

The first, second and third colors that are emitted from the light source of the power status display unit 900 can be changed. For example, the first, second and third colors may be white, red and black, respectively.

According to an example embodiment, the light source of the power status display unit 900 may be turned on or turned off according to an operation mode of the display apparatus 100.

For example, the light source of the power status display unit 900 may be turned on in the turn-on mode, and may be turned off in the turn-off mode.

In the update mode, the light source of the power status display unit 900 may be turned on and off periodically.

When the power status display unit 900 indicates that the display apparatus 100 is in the update mode, a user may wait for a completion of the software update until the power status display unit 900 indicates the turn-off mode.

When the software update continues, the user or the other user may press a turn-on button for requesting to turn on the display apparatus 100.

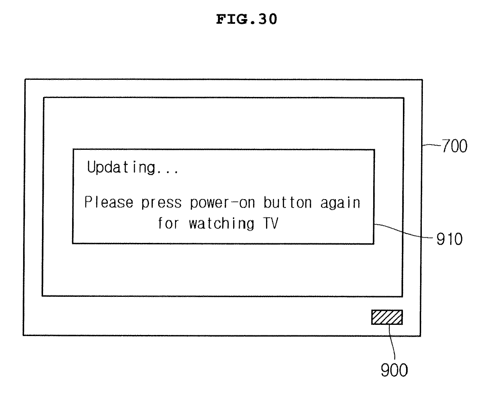

FIG. 30 shows that when the user press the turn-on button during the update mode, the display 180 may display a popup window 910 for indicating that the software update is now in progress.

The user can press the turn-on button again in order to turn on the display apparatus 100. After the display apparatus 100 is turned on, the software update may be stopped.

When the user presses a turn-off button after that, the stopped update may be resumed.

Unless the user presses the turn-on button, the software update continues, and the display apparatus 100 may not be turned on.

For example, if the user didn't press the turn-on button again within a given time, the popup window 910 disappears, and the software update may be continuously performed.

According to embodiments of the present invention, updating for software such as a firmware or an application may be performed upon turn-off of the display apparatus, thereby decreasing inconvenience that is caused by delaying an operation of the display apparatus due to a software update operation.

The software update method may be manufactured as programs executable in computers and may be stored in a computer readable recording medium. Examples of the computer readable recording medium may include read-only memory (ROM), random-access memory (RAM), CD-ROMs, magnetic tapes, floppy disks, optical data storage devices, and/or carrier waves (such as data transmission through the Internet).

The computer readable recording medium may be distributed over network coupled computer systems so that the computer readable code is stored and executed in a distributed fashion. Functional programs, codes, and code segments for accomplishing embodiments of the present invention may be easily construed by programmers skilled in the art to which the embodiments pertain.

Embodiments may provide a method of efficiently updating or upgrading software for operating of a display apparatus, and a display apparatus using the same.

A method may be provided of updating or upgrading software for operation of a display apparatus. The method may include determining whether the software is updated, changing to an upgrade mode (or update mode) to perform upgrade for the updated software, when there is a turn-off request for the display apparatus, and changing to a turn-off mode after the upgrade or update is completed, and turning off a power source of the display apparatus.

A display apparatus may include a memory for storing software for operation of the display apparatus, a controller for determining whether the software is updated, and for performing updating for the software, a network interface for downloading the updated software, a power supply for supplying a power source necessary for operation of the display apparatus, and a display for displaying an image on a screen. When there is a turn-off request for the display apparatus, the controller controls the display for the screen to be off, performs upgrade (or update) of the software, and turns off a power source of the display apparatus after completion of the upgrade (or update).

The software update (or upgrade) method may be implemented as a computer-readable recording medium storing a program for executing the method in the computer.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A multifunctional display apparatus, comprising:
a tuner to tune to a channel of a broadcast signal;
a network interface to receive data packets;
a display having a screen to display an image;
a power supply to supply power for operation of the display apparatus;
a wireless input interface to receive signals from a wireless remote control device;
a storage device to store data, the stored data including software; and
a controller to control the display apparatus based on at least one of a received broadcast signal, data packets or signals received from the wireless remote control device, and the controller to determine whether software stored in the storage device is to be updated,
wherein the controller to provide the display apparatus in an update mode in response to the display apparatus receiving a turn-off request and the controller determining that the software is to be updated, wherein in the update mode the display apparatus receives updated software and power to the display is OFF, and
the controller to provide the display apparatus in a turn-off mode after completing the update mode, wherein in the turn-off mode, power to additional components of the display apparatus is OFF.

2. The multifunctional display apparatus according to claim 1, wherein the display apparatus receiving updated software includes extracting information from the received broadcast signal.

3. The multifunctional display apparatus according to claim 1, wherein in the update mode, power is provided to the controller and the storage device.

4. The multifunctional display apparatus according to claim 1, wherein the controller determines whether the stored software is to be updated at one of a turn-on request time, a turn-off request time or a predetermined time.

5. The multifunctional display apparatus according to claim 1, wherein the storage device stores information regarding the updated software, and wherein in the update mode software corresponding to the stored information is downloaded from the Internet.

6. The multifunctional display apparatus according to claim 1, wherein a consumption power of the display apparatus is based on a mode of the display apparatus in a decreasing order of a turn-on mode before the turn-off request, the update mode and the turn-off mode.

7. The multifunctional display apparatus according to claim 1, wherein the software is an application program installed in the display apparatus.

8. The multifunctional display apparatus according to claim 7, wherein the controller determining whether the software is to be updated includes the controller determining whether to update a plurality of applications installed in the display apparatus when there is a turn-on request or the turn-off request, or at prescribed intervals.

9. A method of updating software for a display apparatus that includes a tuner to tune to a channel of a broadcast signal, a network interface to receive data packets, a display, a power supply to supply power for operation of the display, a wireless input interface to receive signals from a wireless remote control device, a storage device to store software data, and a controller to control the display based on at least one of a received broadcast signal, data packets or signals received from the wireless remote control device, the method comprising:
determining that software stored in the storage device is to be updated;
receiving a turn-off request;
providing the display apparatus in an update mode in response to receiving the turn-off request and a determination that software stored in the storage device is to be updated, wherein in the update mode the display apparatus receives updated software and power to the display is OFF; and
providing the display apparatus in a turn-off mode after completing the update mode, wherein in the turn-off mode, power to additional components of the display apparatus is OFF.

10. The method according to claim 9, wherein receiving updated software includes extracting information from the received broadcast signal.

11. The method according to claim 9, wherein in the update mode, power is provided to the controller and the storage device.

12. The method according to claim 9, wherein determining that the software stored in the storage device is to be updated is performed at one of a turn-on request time, a turn-off request time or a predetermined time.

13. The method according to claim 9, wherein receiving updated software includes:
storing information regarding the updated software in the storage device; and
downloading software corresponding to the stored information from the Internet.

14. The method according to claim 9, wherein a consumption power of the display apparatus is in a decreasing order of a turn-on mode before the turn-off request, the update mode and the turn-off mode.

15. The method according to claim 9, wherein determining that the software stored in the storage device is to be updated includes determining to update a plurality of applications installed in the display apparatus when there is a turn-on request or the turn-off request, or at prescribed intervals.
